(19) Europäisches Patentamt
European Patent Office
Office européen des brevets

(11) Veröffentlichungsnummer: **0 103 106**
**B1**

(12) # EUROPÄISCHE PATENTSCHRIFT

(45) Veröffentlichungstag der Patentschrift: **18.03.87**

(51) Int. Cl.⁴: **C 08 K 5/34,** C 08 L 101/00, C 08 C 19/40 // (C08L101/00, 9:00)

(21) Anmeldenummer: **83106914.1**

(22) Anmeldetag: **14.07.83**

(54) **Verwendung eines Aminogruppen tragenden, niedermolekularen 1,3-Butadienpolymerisates als Stabilisierungsmittel für Kunststoffe.**

(30) Priorität: **14.09.82 DE 3233949**

(43) Veröffentlichungstag der Anmeldung: **21.03.84 Patentblatt 84/12**

(45) Bekanntmachung des Hinweises auf die Patenterteilung: **18.03.87 Patentblatt 87/12**

(84) Benannte Vertragsstaaten: **AT BE CH DE FR GB IT LI NL SE**

(56) Entgegenhaltungen:
**EP-A-0 001 803**
**DE-B-2 838 930**

(73) Patentinhaber: **HÜLS AKTIENGESELLSCHAFT, Patentabteilung / PB 15 - Postfach 13 20, D-4370 Marl 1 (DE)**

(72) Erfinder: **Konietzny, Alfred, Dr., Lipper Weg 195, D-4370 Marl (DE)**
Erfinder: **Zagefka, Hans- Dieter, Dr., Im Dahläckern 11, D-4358 Haltern (DE)**
Erfinder: **Rombusch, Konrad, Dr., Flämingstrasse 5, D-4370 Marl (DE)**
Erfinder: **Bax, Hanns- Jörg, Dr., Lipperweg 193, D-4370 Marl (DE)**

**EP 0 103 106 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Gegenstand der Erfindung ist die Verwendung eines Aminogruppen tragenden, niedermolekularen 1,3-Butadienpolymerisates als Stabilisierungsmittel für geformte oder ungeformte Kunststoffe.

Es ist bekannt, daß Derivate von sterisch gehinderten Piperidinderivaten, insbesondere von 2.2.6.6-Tetramethylpiperidin, als Lichtstabilisatoren Verwendung finden. So wurden in der DE-OS 19 29 921 die Alkylpiperidyldiester von Dicarbonsäuren, in der DE-PS 26 06 026 die Tetramethyl-diaza-oxa-oxo-dispiroalkane beschrieben. Aus der DE-OS 26 38 855 sind 1.3-Bis-alkylamino-cyclobuten-diylium-2.4-diolate als Stabilisierungsmittel für Kunststoffe bekannt. Häufig sind diese zumeist niedermolekularen Piperidinderivate jedoch zu flüchtig oder zu leicht extrahierbar, oder zeigen eine zu hohe Migrationstendenz.

Die bekanntgewordenen höhermolekularen, insbesondere polymeren Derivate von sterisch gehinderten Piperidinderivaten haben als Lichtstabilisatoren für Kunststoffe den Nachteil, daß sie in dem auszurüstendem Kunststoff entweder nicht ausreichend wirksam und bzw. oder damit nicht verträglich sind.

Aus der EP-A-1 803 sind Copolymerisate bekannt aus Butadien und Piperidinderivaten, welche Carbonsäureester -bzw. Carbonsäureamidgruppen enthalten. Derartige Substanzen sind wegen der Ester- bzw. -amidgruppierung äußerst hydrolyseempfindlich und auch wegen des hohen Grades an ungesättigten Doppelbindungen nicht hinreichend als Stabilisatoren brauchbar.

Es bestand daher die Aufgabe, höhermolekulare, insbesondere polymere Tetramethylpiperidinderivate bereitzustellen, die mit den Kunststoffen gut verträglich sind und sie sehr gut stabilisieren. Die stabilisierende Wirkung soll dauerhaft sein, d. h. die Stabilisatoren sollen praktisch nicht flüchtig und nicht extrahierbar sein bzw. praktisch keine Migrationsneigung aufweisen. Die Stabilisierungsmittel der Erfindung sind besonders gute Lichtstabilisatoren.

Die Lösung der Aufgabe gelingt durch das Verwenden eines in den Ansprüchen beanspruchten Aminogruppen tragenden, niedermolekularen 1,3-Butadienpolymerisates als Stabilisierungsmittel für geformte oder ungeformte Kunststoffe.

Dieses 1.3-Butadienpolymerisat wird erhalten durch Umsetzen eines epoxidierten Polybutadiens mit einem Epoxidgehalt von 2 bis 10 Masse-% Sauerstoff (nach DIN 16 945) mit einem substituierten Piperidin der allgemeinen Formel

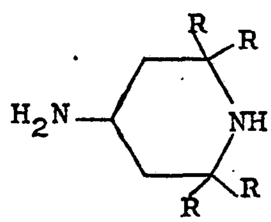

in der R gleichartige oder verschiedenartige Alkylreste mit 1 bis 3 Kohlenstoffatomen darstellen kann, bis zu einem Gehalt von 0,3 m Tetraalkyl-Piperidin/100 g Umsetzungsprodukt, wobei das Basispolybutadien ein Molgewicht ($\bar{M}n$) von 500 bis 6 000, eine Iodzahl von mindestens 200 und einen Gehalt an Doppelbindungen in trans-Struktur von höchstens 40 % hat.

Vorteilhaft beträgt der Epoxidgehalt des epoxidierten Polybutadiens 4 bis 8 Masse-%.

In einer besonderen Ausführungsform können die Doppelbindungen des Basispolybutadien bis zu einer Iodzahl von höchstens 10 hydriert worden sein.

Für die Stabilisierungsmittel eignet sich als zugrundeliegendes Basis-Polybutadien solches, das zumindest aus 70 Mol-% 1,3-Butadien aufgebaut ist. Als Comonomere kommen copolymerisierbare 1,3-Diolefine, wie Isopren und 1,3-Pentadien, infrage. Ferner können copolymerisierbare, α-ungesättigte Monoolefine, wie Styrol, als Comonomere eingesetzt werden. Sie sind jedoch weniger als Comonomere bevorzugt.

Die Copolymerisate sind vorzugsweise aus mindestens 90 Mol-% 1,3-Butadien sowie maximal 10 Mol-% der Comonomeren aufgebaut.

Ganz besonders bevorzugt sind Homopolybutadiene.

Die Basispolymere besitzen eine Molmasse ($\bar{M}n$) von 500 bis 6 000, vorzugsweise von 800 bis 3 000, (dampfdruckosmometrisch bestimmt), und eine Iodzahl von wenigstens 200, vorzugsweise mindestens 300 g Iod/100 g.

Die Epoxidgruppen enthaltenden 1,3-Butadienpolymerisate lassen sich z. B. aus Butadien(co)-polymerisaten, wie sie beispielhaft in den DE-PSS 11 86 631, 12 12 302, 12 41 119, 12 51 537, 12 92 853, 20 29 416, 21 22 956 und der DE-OS 23 61 782 beschrieben sind, durch Epoxidierung herstellen, wobei die Epoxidierung in an sich bekannter Weise erfolgen kann, beispielsweise wie in der DE-PS 28 38 930, Spalte 7, letzter Absatz, beschrieben, wobei gegebenenfalls auch Vinylgruppen epoxidiert werden.

Einen anderen bekannten Weg zu geeigneten Epoxidgruppen enthaltenden 1,3-Butadienpolymerisaten zu gelangen, stellt die terminale Funktionalisierung mit z. B. Epichlorhydrin von Polymeren dar, die bei dem sogenannten Living-Polymerization-Prozeß erhalten werden. Derartige 1,3-Butadienpolymerisate mit endständigen Epoxidgruppen sind handelsüblich.

Der Gehalt der Polymerisate an titrierbarem Epoxidsauerstoff (DIN 16 945) beträgt 2 bis 10 Masse-%,

vorzugsweise 4 bis 8 Masse-%. In den Epoxidgruppen enthaltenden Homo- oder Copolymerisaten liegen höchstens 40 % der olefinischen Doppelbindungen in trans-Struktur vor.

Das epoxidierte Butadienpolymerisat wird nach seiner Isolierung in an sich bekannter Weise, z. B. analog der DE-PS 28 38 930, in der Wärme mit dem sterisch gehinderten Piperidinderivat zur Reaktion gebracht und gegebenenfalls dann in an sich bekannter Weise katalytisch, partiell oder vollständig, d. h. bis zu einer Iodzahl $\leqslant$ 10 (g Iod/100 g), hydriert.

Beispiele für ein Basispolymer sind (a) ein Polybutadien der Molmasse 1 700, der Iodzahl 450 (g Iod/100 g), dem cis/trans/vinyl-Verhältnis von 72/27/1; (b) ein Polybutadien der Molmasse 1 050, der Iodzahl 390 (g Iod/100 g), dem cis/trans/vinyl-Verhältnis von 0/13/87; (c) ein Polybutadien der Molmasse 1 300, der Iodzahl 390 (g Iod/100 g), dem cis/trans/vinyl-Verhältnis von 20/30/50; (d) ein Polybutadien der Molmasse 1 300, der Iodzahl 440 (g Iod/100 g), dem cis/trans/vinyl-Verhältnis von 49/14/37; (e) ein Polybutadien der Molmasse 3 300, der Iodzahl 440 (g Iod/ 100 g), dem cis/trans/vinyl-Verhältnis von 72/27/1.

Die erfindungsgemäßen Stabilisatoren werden in die Polymeren in einer Konzentration von 0,01 bis 2,0, vorzugsweise 0,1 bis 1,0, insbesondere 0,2 bis 0,5, Masse-%, bezogen auf den zu stabilisierenden Kunststoff, verwendet.

Geeignete Kunststoffe sind Homo- und Copolymerisate von Olefinen oder Diolefinen, Polyisopren, Polybuten, Polypropylen, Polyethylen niederer und hoher Dichte, Polybutadien oder gesättigte oder ungesättigte Ethylen -Propylen-Copolymerisate, Ethylen-Buten-Copolymerisate, Ethylen-Vinylacetat-Copolymerisate, Butadien-Styrol-Copolymerisate, Butadien-Styrol-Acrylnitril-Copolymerisate, ferner Homo- und Copolymerisate des Styrols oder seiner Homologen, wie α-Methylstyrol oder p-Methylstyrol, z. B. Polystyrol, Styrol-Butadien-Copolymerisate, ferner sogenannte schlagfeste Polystyroltypen, wie Pfropfpolymerisate des Styrols mit Elastomeren oder auch Mischungen von Homo-, Co- oder Pfropfpolymerisaten, außerdem Homo-, Co- und Pfropfpolymerisate des Vinylchlorids, wie Polyvinylchlorid, Polyvinylidenchlorid, Vinylchlorid-Vinylidenchlorid-Copolymerisate, Vinylchlorid-Vinylacetat-Copolymerisate, oder auch Polyvinylacetet oder gesättigte und ungesättigte Polyester, wie Polyethylenterephthalat, Polybutylenterephthalat, Polyetherester oder auch Polyurethane, Polyisocyanurate, Polyacrylnitril und deren Copolymerisate.

Besonders geeignet sind carbonamidgruppenhaltige Kunststoffe, wie a) Polyamide, z. B. Homopolyamide, wie sie in üblicher Weise aus Lactamen mit mehr als 5 Kohlenstoffatomen im Ring bzw. aus den entsprechenden ω-Aminosäuren, wie Caprolactam, Capryllactam, Laurinlactam, Undecyllactam, Oenanthlactam, oder aus α,ω-Diaminen und α,ω-Dicarbonsäuren mit mehr als 3 Kohlenstoffatomen zwischen den funktionellen Gruppen, wie beispielsweise Tetramethylendiamin, Hexamethylendiamin, Trimethylhexamethylendiamin, Isophorondiamin, Octamenthylendiamin, Dodecamethylendiamin und Adipinsäure, Pimelinsäure, Korksäure, Acelainsäure, Sebacinsäure, Undecandicarbonsäure, Dodecandicarbonsäure, Terephthalsäure, Isophthalsäure, hergestellt werden können, ferner die entsprechenden b) Copolyamide, c) Polyetheramide und d) Polyetheresteramide. Vorzugsweise werden verwendet die Homo- oder Copolyamide des Laurinlactams. Besonders geeignet sind auch Polyester, beispielsweise Polybutylenterephthalat, und Polyetherester, z. B. aufgebaut aus Terephthalsäure, 1,4-Butandiol und Poly(oxytetramethylen)glykol.

Den Kunststoffen können neben den erfindungsgemäßen Verbindungen weitere Zusätze, wie Flammschutzmittel, Antielektrostatika, Weichmacher, Gleitmittel, Pigmente, Farbstoffe, Füllstoffe, Verstärkungsstoffe oder zusätzliche Stabilisatoren, wie z. B. weitere Lichtstabilisatoren, Antioxidantien oder Wärmestabilisatoren zugesetzt werden.

Besonders vorteilhaft beim Stabilisieren von carbonamidgruppenhaltigen Kunststoffen ist der weitere Zusatz von Alkalisalzen der unterphosphorigen Säure, insbesondere der Natriumsalze in Mengen von 0,01 bis 1,5, vorzugsweise 0,05 bis 0,75 und insbesondere 0,1 bis 0,3 Masse-%, bezogen auf den Kunststoff.

Die Stabilisierungsmittel gemäß der Erfindung lassen sich auf bekannte Weise den Kunststoffen zufügen. Zum Beispiel können sie vor oder während der Polymerisation bzw. Polykondensation den Monomeren zugegeben werden oder sie können in Knetern oder Strangpressen in die Formmassen eingeknetet werden. Sie können aber auch Lösungen der Kunststoffe zugesetzt werden, aus denen nach Entfernen des Lösungsmittels z. B. Pulver für Überzugsmittel oder Folien hergestellt werden. Die Art der Einarbeitung richtet sich hier in üblicher Weise nach der Art des Kunststoffes, seiner Herstellung oder seiner Verarbeitung. Außerdem können sie bei der Herstellung der Formkörper in die Formmassen eingebracht oder - falls besonderes gewünscht - auf die Formkörper in geeigneter Weise, z. B. durch Auftrommeln oder Aufsprühen in Form einer Lösung, aufgebracht werden. So ist es möglich, die Stabilisierungsmittel für Kunststoffe einzusetzen, die zur Herstellung von Fasern, Folien, Platten oder anderen extrudierten oder spritzgegossenen Formkörpern dienen. Die geformten oder ungeformten Kunststoffe können auch in Form von Latices eingesetzt werden; sie können auch zur Herstellung von Schaumstoffen eingesetzt werden.

Kunststoffe mit Gehalt an den beanspruchten Verbindungen in stabilisierend wirkenden Mengen eignen sich besonders zur Herstellung von Formteilen, die auch bei landandauernder Belichtung, vor allem im Freien, die guten mechanischen Eigenschaften und ihr vorteilhaftes Aussehen nicht einbüßen dürfen.

In den Beispielen 1 und 2 wird die Herstellung der Stabilisierungsmittel beispielhaft beschrieben. Neben den bereits erwähnten Kenndaten wie Molmasse, Iodzahl und Doppelbindungsverteilung des Basispolymers (Polybutadien), Epoxid-0-Gehalt der als Zwischenprodukte auftretenden Epoxid-Verbindungen, schließlich Gehalt an Piperidylrest und Hydrieriodzahl werden die physikalischen Eigenschaften, wie Flüchtigkeit

(bestimmt durch Thermogravimetrie), Löslichkeit in Wasser und Benzin, sowie Extrahierbarkeit durch Lösungsmittel, wie Methanol und Toluol, genannt (Tabelle 1). Die analog den Beispielen 1 oder 2 hergestellten Stabilisatoren werden dort mit a bis k bezeichnet.

In Tabelle 2 sind die entsprechenden Eigenschaften der Vergleichssubstanzen aufgeführt, wobei die Stabilisatoren A und B analog DE-A-19 29 921, der Stabilisator C entsprechend DE-B-26 06 026 und der Stabilisator D entsprechend DE-A-26 38 855 erhalten wurde.

In der Tabelle 3 wird die Verwendung der Stabilisatoren a, b, f, h, k und der Vergleichsstabilisatoren A, B und C näher beschrieben.

Zur Prüfung der Wirksamkeit als Lichtstabilisatoren wurden die zu prüfenden Produkte auf Polyamid 12-Granulate aufgetrommelt und das erhaltene Gemisch in einem Zweischneckenextruder homogenisiert. Die auf diese Weise erhaltenen Granulate wurden sodann zu 1 mm starken Platten gepreßt und einer durch Filter dem Sonnenlicht angeglichenen Strahlung (Apparatur mit Ultravitaluxlampen bestückt (keine Xenonbrenner) ausgesetzt. Die Prüfung erfolgte an abgeschnittenen, ca. 1 x 3 cm große Plättchen, indem diese in Richtung der unbestrahlten Seite um 180 ° gebogen wurden ("Knicktest"). Notiert wurde die Zeit bis zum Bruch der Plättchen. In Polyetherester, aufgebaut aus Terephthalsäure, 1,4-Butandiol und Polytetrahydrofuran mit $\bar{M}_n$ = 1 000 und einem Polytetrahydrofurananteil von 32 % im Polyetherester, wurden die zu prüfenden Produkte entweder in die Polyetheresterschmelze eingerührt (Zugabezeitpunkt "E") oder zu den Ausgangsverbindungen vor der Polykondensation (Zugabezeitpunkt "V") gegeben. Mit 1 mm starken Plättchen wurden im Xenotestgerät Belichtungstests (DIN 53 389) und Bewitterungstests (DIN 53 387) durchgeführt, wobei als Maß für den Abbau der Produkte die konzentrationsbezogene relative Viskositätsänderung J (vgl. DIN 53 728) bestimmt wurde. Das Ergebnis ist in Tabelle 4 für Stabilisator a und in Tabelle 5 für Vergleichsstabilisator A enthalten.

**Beispiel 1**

a) 12,5 Gewichtsteile des Polybutadienöls mit der Molmasse 1 700, der Iodzahl 450 (g Iod/100 g) und dem cis/trans/vinyl-Verhältnis von 72/27/1 werden in 40 Gewichtsteilen Chloroform gelöst und zum Sieden erhitzt. Eine Mischung von 5,73 Gewichtsteilen 60 %igem $H_2O_2$ und 1,2 Gewichtsteilen Ameisensäure wird innerhalb von 90 min zugetropft, danach hält man die Reaktionsmischung 5 Stunden bei Siedetemperatur. Nach Abkühlen wird die organische Phase bei 20 °C mit Wasser gewaschen, bis sie frei von Säure und $H_2O_2$ ist. Die Hauptmenge des Wassers wird abgetrennt, den Restgehalt entfernt man bei der Destillation des Chloroforms.

Nach dem Abziehen des Chloroforms im Vakuum erhält man 13,9 Gewichtsteile eines klaren farblosen epoxidierten Butadienpolymerisates mit einer Viskosität (20 °C) von 28,0 Pas (Ausbeute 98 %). Der Gehalt an Epoxidsauerstoff (DIN 16 945) beträgt 8,15 %. Iodzahl (theoretisch): 220 (g Iod/ 100 g)

Epoxidierte Butadienpolymerisate mit abweichenden Sauerstoffgehalten (z. B. 6 % Epoxidsauerstoffgehalt nach DIN 16 945) werden analog obiger Vorschrift hergestellt.

b) Zur Herstellung des erfindungsgemäßen Stabilisierungsmittels werden 733 Gewichtsteile epoxidiertes 1,3-Butadienpolymerisat mit einem Epoxid-Sauerstoffgehalt von 8,15 % (nach DIN 16 945) unter Stickstoff mit 290 Gewichtsteilen 4-Amino-2.2.6.6-tetramethyl-piperidin gemischt und unter Rühren bei 190 °C umgesetzt. Nach 20 Stunden ist das Amin praktisch quantitativ umgesetzt. Das Produkt enthält 0,270 m Tetramethylpiperidin/100 g Addukt und weniger als 0,5 Gew.-% Restepoxid-Sauerstoff.

**Beispiel 2**

300 Gewichtsteile des Reaktionsproduktes aus Beispiel 1b werden in 700 Teilen Isopropanol gelöst und mit 13 Gewichtsteilen Raney-Nickel versetzt und hydriert. Die Hydrierung erfolgt im Autoklaven bei 110 °C und einem Druck von 250 bar. Nach einer Reaktionszeit von 8 Stunden wird das Lösemittel abgetrennt und ein Produkt mit 0,4 Gew.-% Restepoxid-Sauerstoff und einer Iodzahl $\leqslant$ 4 (g Iod/ 100 g) erhalten.

**Tabelle 1**

| Stabilisator | Basispolymer (vor Umsetzung) | | | | | Gehalt an Epoxid-O vor Aminierung (Masse-%) | Gehalt an 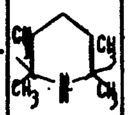 (Masse-%) | Iodzahl (g Iod/ 100 g) ber. | Eigenschaften der erfindungsgemäßen Stabilisatoren | | | | |
|---|---|---|---|---|---|---|---|---|---|---|---|---|---|
| | Molmasse | Iodzahl (g Iod/ 100 g) | Doppelbindungs-Verteilung | | | | | | Flüchtigkeit, mittels Thermogravimetrie bestimmt | | | Löslichkeit in | |
| | | | cis % | trans % | vinyl % | | | | 2 % | 50 % | 80 % | Wasser bei 100 °C | Benzin bei 22 °C |
| | | | | | | | | | Gewichtsabnahme bei einer Temp. (°C) von: | | | (Masse-%) | |
| a | 1 700 | 450 | 72 | 27 | 1 | 8,2 | 37 | 105 | 225 | 385 | 430 | <0,1 | 2,5 |
| b | 1 700 | 450 | 72 | 27 | 1 | 8,2 | 37 | <4 | 200 | 385 | 475 | <0,1 | 2,5 |
| c | 1 700 | 450 | 72 | 27 | 1 | 8,2 | 22 | 145 | | | | | |
| d | 1 700 | 450 | 72 | 27 | 1 | 8,2 | 22 | <10 | | | | | |
| e | 1 700 | 450 | 72 | 27 | 1 | 5,8 | 13 | 280 | 300 | 420 | 475 | <0,1 | >35 |
| f | 1 050 | 390 | - | 13 | 87 | 8,0 | 39 | 90 | 250 | 400 | 460 | <0,1 | <0,2 |
| g | 1 300 | 390 | 20 | 30 | 50 | 8,1 | 39 | 95 | 250 | 380 | 450 | <0,1 | <0,2 |
| h | 1 300 | 440 | 49 | 14 | 37 | 8,0 | 38 | 98 | 275 | 410 | 470 | <0,1 | 0,5 |
| i | 3 300 | 440 | 72 | 27 | 1 | 5,4 | 30 | 128 | 325 | 400 | 475 | <0,1 | >50 |
| k | 3 300 | 440 | 72 | 27 | 1 | 8,2 | 35 | 115 | 320 | 390 | 470 | <0,1 | 0,5 |

**Tabelle 2**

| | Vergleichsstabilisator | Gehalt an 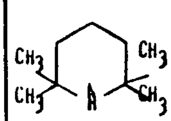 (Masse-%) | Eigenschaften der erfindungsgemäßen Stabilisatoren | | | | |
|---|---|---|---|---|---|---|---|
| | | | Flüchtigkeit, mittels Thermogravimetrie bestimmt | | | Löslichkeit in | |
| | | | 2 % | 50 % | 80 % | Wasser bei 100 °C | Benzin bei 22 °C |
| | | | Gewichtsabnahme bei einer Temp. (°C) von: | | | (Masse-%) | |
| A | Bis-(2,2,6,6-tetramethylpiperidyl-(4))-sebazat | 58 | 210 | 290 | 305 | 0,5 | 34,5 |
| B | Oligoester aus Bernsteinsäure und 1-Hydroxyethyl-4-hydroxy-2,2,6,6-tetramethyl-piperidin | 49 | 290 | 355 | 375 | 0,1 | >30 |
| C | 2,2,4,4-Tetramethyl-3,20-diaza-7-oxa-21-oxo-dispiro[5,1,11,2]heneicosan | 38 | 200 | 280 | 300 | <0,1 | 0,6 |
| D | 1,3-Bis-[n-propyl-(2,2,6,6-tetramethyl-piperidyl-(4))-amino]-cyclobuten-diylium-2,4-diolat | | 220 | 300 | 320 | 0,5 | 0,1 |

**Tabelle 3**

| Stabilisator | Konzentration des Stabilisatos im Compound (Gew.-%) | 8stündige Extraktion aus dem Compound mit siedendem Methanol/Chloroform (% der max. extrahierbaren Menge) | | Belichtungstest (h Belichtung, bis Bruch) ohne Costabilisation | mit Costabilisation*) |
|---|---|---|---|---|---|
| a | 0,25 | 3,0 | 3,4 | 642 | 1 019 |
| b | 0,25 | 4,4 | 5,8 | 654 | 1 089 |
| f | 0,25 | 3,9 | 3,8 | 608 | 1 019 |
| h | 0,25 | 3,2 | 3,5 | 652 | 1 019 |
| k | 0,25 | 3,1 | 3,6 | 602 | 992 |
| a | 0,25 | 3,0 | 3,4 | 642 | 1 163 |
| b | 0,25 | 4,4 | 5,8 | 654 | 1 147 |
| Vergleichsstabilisator | | | | | |
| A | 0,25 | 68,7 | 69,9 | 547 | 725 |
| B | 0,25 | 3,6 | 4,2 | 502 | 680 |
| C | 0,25 | 83,1 | 97,2 | 566 | 796 |

*) 0,25 Gewichtsteile 2-(3,5-Di-tert.-butyl-2-hydroxy-phenyl)benztriazol
0,25 Gewichtsteile N.N'-Bis-[3-(3,5-di-tert.-butyl-4-hydroxy-phenyl)-propionyl]-hexamethylendiamin
0,25 Gewichtsteile Tris-(2,4-di-tert.-butyl-phenyl)-phosphit
0,20 Gewichtsteile $NaH_2PO_2 \cdot H_2O$
Der Stabilisator (a) wurde zusammen mit 0,5 % N.N'-Bis-[3-(3,5-di-tert.-butyl-4-hydroxy-phenyl)-propionyl]-hexamethylendiamin in einen Polyetherester eingearbeitet.

**Tabelle 4**

| Konzentration des Lichtstabilisators (a) im Polymer | Zugabe-Zeitpunkt | Belichtungstest J [ml/g] 0 | nach 40 Tagen | Abbau | Bewitterungstest J [ml/g] 0 | nach 40 Tagen | Abbau |
|---|---|---|---|---|---|---|---|
| 0,35 % | V | 129 | 123 | 5 % | 129 | 123 | 5 % |
| 0,35 % | E | 153 | 145 | 5 % | 153 | 142 | 7 % |

Es wurde anstelle des Lichtstabilisators a 0,5 Masse-% des Vergleichsstabilisators A eingesetzt.

**Tabelle 5**

| Konzentration des Lichtstabilisators (A) im Polymer | Zugabe-Zeitpunkt | Belichtungstest J [ml/g] 0 | nach 40 Tagen | Abbau | Bewitterungstest J [mlg/g] 0 | nach 40 Tagen | Abbau |
|---|---|---|---|---|---|---|---|
| 0,5 % | V | 171 | 108 | 37 % | 171 | 128 | 25 % |
| 0,5 % | E | 165 | 152 | 8 % | 165 | 147 | 11 % |

Der Abbau der Polyetherester war hier höher, obwohl diese durch den Stabilisator mehr als doppelt so viel als Radikalfänger wirksamen Stickstoff (290 ppm) enthielte wie die mit den erfindungsgemäßen Produkten ausgerüsteten Polyetherester (132 ppm).

**Extraktions- und Sublimationsversuche**

Zwei Polyetherestergranulate, stabilisiert nur mit dem Stabilisator (a), und zwei Polyetherestergranulate, stabilisiert nur mit dem Vergleichsstabilisator (A), wurden in 8 Stunden mit siedendem Methanol bzw. mit siedendem Toluol extrahiert und 24 Stunden bei 195 °C im Vakuum gelagert. Bei diesen Versuchen wurde der Stickstoffgehalt der Polyetherester bestimmt. (Ergebnisse sind in der folgenden Tabelle 6 enthalten.)

**Tabelle 6**

| Konzentration des Stabilisators im Polyetherester | Zugabezeitpunkt | ppm N theor. | Ausgangsgranulat | ppm N im Polyetherester nach 8 h/65 ° Methanol | nach 8 h/110° Toluol | nach 24 h/195°/1 mbar |
|---|---|---|---|---|---|---|
| 0,7 % a | V | 528 | 510 | 510 | 480 | 470 |
| 0,7 % a | E | 528 | 520 | 490 | 480 | 500 |
| 1 % A | V | 580 | 54 | 12 | 35 | 16 |
| 1 % A | E | 580 | 570 | 120 | 310 | 150 |

Während der polymere Stabilisator (a) bei den Operationen praktisch verlustfrei im Polyetherester verbleibt, ist der niedermolekulare Vergleichs-Stabilisator (A) leicht extrahierbar und sublimierbar. Bei Zugabe zu den Ausgangsverbindungen ging er bereits unter den Polykondensationsbedingungen 5 h/230 °/1 mbar zu etwa 90 % verloren.

**Patentansprüche**

1. Verwendung eines Aminogruppen tragenden, zumindest zu 70 % aus 1,3-Butadien aufgebautem Butadienpolymerisates, welches erhalten worden ist durch Umsetzen eines epoxidierten Polybutadiens, mit einem Epoxidgehalt von 2 bis 10 Masse-% Sauerstoff (nach DIN 16 945), mit einem substituierten Piperidin der allgemeinen Formel

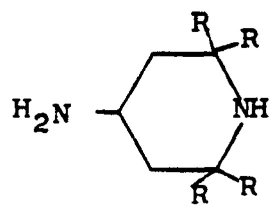 ,

in der R gleichartige oder verschiedenartige Alkylreste mit 1 bis 3 Kohlenstoffatomen darstellt, bis zu einem Gehalt an 0,3 m Tetraalkyl-piperidin/100 g Umsetzungsprodukt, wobei das Basispolybutadien ein Molgewicht ($\bar{M}\bar{n}$) von 500 bis 6 000, eine Iodzahl von mindestens 200 (g Iod/100 g) und einen Gehalt an Doppelbindungen in trans-Struktur von höchstens 40 % besitzt, in Mengen von 0,01 bis 2,0 Masse-%, bezogen auf den Kunststoff, als Stabilisierungsmittel für geformte oder ungeformte Kunststoffe.

2. Verwendung des Stabilisierungsmittels nach Anspruch 1, dadurch gekennzeichnet, daß das Basispolybutadien ein Molgewicht ($\bar{M}\bar{n}$) von 1 000 bis 3 000 und einen cis-Gehalt von 70 bis 80 % der vorhandenen Doppelbindungen besitzt.

3. Verwendung des Stabilisierungsmittels nach den Ansprüchen 1 und 2, dadurch gekennzeichnet, daß die Doppelbindungen des Basispolybutadiens nach der Reaktion mit dem Piperidinderivat bis zu einer Iodzahl von höchstens 10 (g Iod/100 g) hydriert worden sind.

4. Verwendung des Stabilisierungsmittels nach den Ansprüchen 1 bis 3 als Stabilisierungsmittel für Ester- und bzw. oder Carbonamidgruppen enthaltende geformte oder ungeformte Kunststoffe.

5. Verwendung eines Stabilisierungsmittels nach Anspruch 4, dadurch gekennzeichnet, daß als Costabilisatoren 0,01 bis 1,5 Masse-%, bezogen auf den Kunststoff, Alkalisalze der unterphosphorigen Säure mitverwendet werden.

**Claims**

1. The use as a stabilizer for formed or unformed plastics materials of a butadiene polymer which carries amino groups and is composed of at least 70% of 1,3-buta-diene and which has been obtained by reacting an epoxidized polybutadiene having an epoxide content of 2 to 10% by mass of oxygen (according to - DIN 16 945) with a substituted piperidine of the general formula

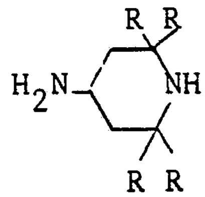 ,

where R represents identical or different alkyl radicals of 1 to 3 carbon atoms, up to a content of 0.3 mole of tetraalkylpiperidine per 100 g of reaction product, the base polybutadiene having a molecular weight (Mn) from 500 to 6,000, an iodine number of at least 200 (g of iodine/100 g) and a content of double bonds of trans-structure of at most 40%, the butadiene polymer being used in an amount from 0.01 to 2.0% by mass, relative to the plastics material.

2. The use of the stabilizer according to claim 1, characterised in that the base polybutadiene has a molecular weight ($\bar{M}\bar{n}$) from 1,000 to 3,000 and 70 to 80% of its double bonds are present in the cis-structure.

3. The use of the stabilizer according to claim 1 or 2, characterised in that, after the reaction with the piperidine derivative, the double bonds of the base polybutadiene have been hydrogenated down to an iodine number of at most 10 (g of iodine/100 g).

4. The use of the stabilizer according to any of claims 1 to 3 as a stabilizer for formed or unformed plastics materials containing ester groups and/or carboxamide groups.

5. The use of a stabilizer according to claim 4, characterized in that 0.01 to 1.5% by mass, relative to the plastics material, of an alkali metal salt of hypophosphorous acid is additionally used as co-stabilizer.

**Revendications**

1. L'utilisation, comme stabilisant pour des matières synthétiques moulées ou non, d'un produit de polymérisation du butadiène portant des groupes amine et constitué à 70 % par du 1,3-butadiène, ce produit de polymérisation du butadiène ayant été obtenu en faisant réagir un polybutadiène époxydé, d'une teneur en époxyde de 2 à 10 % en masse d'oxygène (selon DIN 16 945), sur une pipéridine substituée de la formule générale:

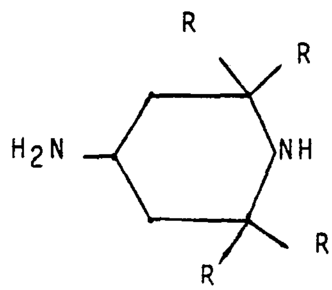 ,

dans laquelle R représente des radicaux alkyle identiques ou différents comportant de 1 à 3 atomes de carbone, jusqu'à une teneur de 0,3 mole de tétra-alkyl-pipéridine par 100 g de produit de réaction, le polybutadiène de base possédant un poids moléculaire ($\bar{M}n$) de 500 à 6 000, un indice d'iode d'au moins 200 (g d'iode par 100 g) et une teneur en doubles liaisons dans la structure trans de 40 % au plus, ce dans des quantites de 0,01 à 2,0 % en masse, relativement à la matière synthétique.

2. L'utilisation du stabilisant selon la revendication 1,
caractérisée par le fait que le polybutadiène de base possède un poids moléculaire ($\bar{M}n$) de 1 000 à 3 000 et une teneur en cis de 70 à 80 % des doubles liaisons présentes.

3. L'utilisation du stabilisant selon les revendications 1 et 2,
caractérisé par le fait qu'après la réaction sur le dérivé de pipéridine, les doubles liaisons du polybutadiène de base sont hydrogénées jusqu'à présenter un indice d'iode au plus égal à 10 (g d'iode par 100 g).

4. L'utilisation du stabilisant selon les revendications 1 à 3, comme agent de stabilisation pour des matières synthétiques moulées ou non-moulées renfermant des groupes ester et/ou carboxylamide.

5. L'utilisation d'un stabilisant selon la revendication 4,
caractérisé par le fait qu'on utilise conjointement, comme costabilisants, de 0,1 à 1,5 % en masse, relativement à la matière synthétique, de sels alcalins de l'acide hypophosphoreux.